# EUROPEAN PATENT SPECIFICATION

(11) **EP 0 835 847 B1**
(45) Date of publication and mention of the grant of the patent: **05.01.2005**
(21) Application number: 97117525.2
(22) Date of filing: 10.10.1997
(51) Int. Cl.: C03B 33/07

(54) **Machine for cutting laminated glass plates**
Maschine zum Schneiden von Verbundglasscheiben
Machine pour couper des feuilles de verre laminées

(30) Priority: 14.10.1996 IT TV960128
(43) Date of publication of application: 15.04.1998
(73) Proprietor: FOR.EL. BASE di VIANELLO FORTUNATO & C. S.n.c., 31056 Vallio di Roncade (Treviso) (IT)
(72) Inventor: Vianello, Fortunato, 31056 Vallio di Roncade (TV) (IT); Moschini, Dino, 31050 San Cipriano (TV) (IT)
(74) Representative: Modiano, Guido, Dr.-Ing.

(56) References cited:
- EP-A- 0 503 647
- EP-A- 0 564 758
- EP-A- 0 596 852
- AU-B- 603 937
- DE-A- 4 234 536
- DE-U- 29 608 724
- FR-A- 2 375 041

## Description

Currently, it is known to carry out the cutting of normal glass sheets and laminated glass sheets exclusively on so-called "cutting tables" that carry out all the work to be done on each sheet in a horizontal position where the three phases of scoring, splitting (breaking of the two glass sheets) and separation (of the membrane layer) are all carried out in correspondence to one line, that is by means of the interaction of the tools on the glass sheet in a stationary position.

In the case of single glass sheets, the cutting (and subsequent breaking of the same) obtained either through a manual, semiautomatic or automatic procedure can be accomplished according to a single axis or to two axis orthogonal to each other or according to a combination of the two orthogonal axes obtaining thus, the so-called: "pattern shape cut" (EP 0 564 758 A1, EP 0 587 542 A2).

In the case of laminated glass sheets, the cutting and splitting of the glass followed by the cutting, melting or tearing of the membrane layer (or membranes) are carried out in a horizontal position, only according to one axis in correspondence to a "bridge" containing the various cutting, splitting and membrane separation tools and therefore the strip of glass which has been separated from the rest of the sheet of glass is manually or automatically transferred and rotated by means of sophisticated mechanisms for performing again the same operations carried out beforehand according to another axis generally orthogonal (or however tilted) with respect to the one which has produced the same strip. These subsequent operations are carried out in correspondence to the same "bridge" that has carried out the previous operations. In alternative to the system of rotating the glass strip for placing it in correspondence to the previous "bridge", a procedure is known whereby a second "bridge" is used, orthogonal to the first one to which the glass strip is transferred, generally in an automatic manner, in order to achieve subsequent cuts orthogonal to the previous one (WO 95/16640 A1, EP 0 503 647 A3).

All of these machines so far described suffer from four evident limitations: the non-automation (or automation at considerable costs); the enormous size of these machines, due to the fact that they are operating with glass sheets in a horizontal position and therefore the space required on a plan view is equal to the dimension of a glass sheet (usually 6000 mm x 3210 mm), plus the space for the rotation of the glass strip or for the conveyance of the same to the following bridge, plus the actual dimension of the machine operating over the perimeter of the glass sheet itself; the need of continually handling the process material (glass), changing its position, from vertical (arrival by truck and storage) to horizontal (cutting), back to vertical ( for subsequent manufacturing, for example in the manufacturing of insulated glass and delivery of the finished product); and finally the mediocre quality of cut, the three phases of scoring, splitting (through breaking action of the glass sheets) and separation which all take place in a single section (where the coexistence in the same area of multipurpose tools is difficult , since, due to the limited space, they are far too small to be able to adequately carry out the three processing phases with the power and precision required, leading to consequent serious defectiveness in the phase of splitting (breaking of the two glass sheets) which, instead of following the scored line, is carried out following a casual direction) and the separating phase of the membrane is not achieved in an even manner on the whole area of action relative to the device.

A machine for cutting laminated and armoured glass is also known, which works vertically however employing a grinding disc in a flow of water (RBB machine: advertisement "Rivista del Vetro" issuing April 1995).

The slow pace of this process and the enormous costs of the machine are such that they are only applicable to multi-layered sheets of considerable thickness and which are in no way applicable to laminated glass with a single or normal membrane layer. Furthermore, this machine only achieves a vertical cut of the sheet, whereas for the subsequent orthogonal cuts to the previous one, it is necessary to unload the strip of glass which has been cut, rotate it by 90° and reload it onto the machine or revert to a much more complex conformation of the working unit which has to include the 90° rotation of the tool supporting bit and a sophisticated automation, or in change of very dangerous handling, by holding the strip of glass which remains placed over the tool. Apart from the considerable cost of the machine, even the exercise results as being costly in view of the high cost of the tool (diamond wheel) and of its limited life. Last but not least, the process, which uses water as a principal of the work to be done and for cooling down the tool, results in considerable problems in treating and disposing of the waste water which contains abrasive as well as glass particles.

A machine is also known for the cutting of normal, laminated and armoured glass which works by means of a high pressure hydraulic jet in which the tool is formed by the actual jet of water containing abrasive particles. This machine is not convenient for cutting mono-layered laminated glass and for the modest speed of its process and elevated cost of the machinery due to the need to use very high-pressure pumps. The only advantage, which is not achieved by the other existing machines and which is the subject of this invention (apart from a semiautomatic version), is formed by the possibility of carrying out rounded cuts. Even this process, using water as working principle, results in considerable problems in treating and disposing of waste water which contains abrasive and glass particles.

Other attempts to cut glass with a laser beam are also known which, apart from the noteworthy problems associated with the exorbitant costs, have not proven to be very successful.

The research of previously filed patent applications has resulted in the documents already cited above and in the following minor documents which is not necessary to comment as only subsidiary:

EP 0 274 962 A1; EP 0 402 342 A2; EP 0 455 235 A1; EP 0 472 948 A1; EP 0 603 152 A1.

Document EP 0 596 852 A1 discloses a machine substantially as recited in the preamble of claim 1.

The main object of the present application is therefore to solve the underlined technical problems by eliminating the inconveniences quoted in the state of art and therefore contriving a procedure which allows for the cutting of a laminated glass sheet either automatically or semiautomatically, for fractionating it into its sub-forms, generally in rectangular form but without excluding, albeit with greater complications, polygonal forms and, in the case of the semi-automatic version, also curved forms. All of this by means of a procedure, which results economical, improving the quality of the cut with respect to what is achievable with the state of art and sensibly reducing the occupancy of space in the factory thanks to this cutting process.

The solution to the aspects of reduction in occupancy of space in the factory, economy in the cost of investment as well as costs of production and cutting quality is attained with a machine according to claim 1.

This machine is considered a revolution in the field of cutting laminated glass, in that the state of the art currently foresees scoring, splitting (breaking of the two glass sheets) and separation of the membrane only on the so-called horizontal "cutting tables" on which the cutting "bridge" only works according to one direction of the glass sheet and in order to carry out a cut in a different direction, this requires the sheet to be shifted and rotated manually (or automatically but with sophisticated mechanisms) and to return the glass sheet in correspondence to the same cutting "bridge" or to transfer the glass sheet, either manually or automatically to a second "cutting table" having a consecutive layout yet orthogonal to the previous one on which the relative "bridge" carries out the required cuts orthogonal to those carried out on the first table (solutions which both encounter a considerable size of the plant machinery). Furthermore, the same state of the art, due to the concentration of the three phases in a sole section, involves the use of sophisticated mechanisms including additional movements for the positioning in correspondence to the only section of intervention, a passage which can only result in a downgrading of the quality of the cut or, even worse, waste of many of the pieces which have been cut.

Further characteristics and advantages of the invention will become better apparent from the following description of preferred but not exclusive embodiments of the machine, illustrated by way of non-limitative embodiments in the accompanying drawings, wherein:
figure 1 is a schematic drawing illustrating a plate of glass on which an example of tracing is shown for the division of the glass in minor stripes;
figure 2 is a lateral cross-section view of the machine according to the invention during a first phase of the cutting process, in which a jumbo-sized glass sheet is approaching the cutting table of the machine;
figure 3 is a lateral cross-section view of the machine according to the invention during first scoring and splitting phases;
figure 4 is a lateral cross-section view of the machine according to the invention during first separation phase;
figure 5 is a lateral cross-section view of the machine according to the invention during the phase of conveying the cut glass strip to a rotating station;
figure 6 is a lateral cross-section view of the machine according to the invention during the phase of rotation of the cut glass strip;
figure 7 is a lateral cross-section view of the machine according to the invention during second scoring and splitting phases of the cut glass strip;
figure 8 is a lateral cross-section view of the machine according to the invention during second separation phase;
figure 9 is a lateral cross-section view of the machine according to the invention during the phase of conveying the finished piece to an unloading station;
figure 10 is a schematic cross-section view of the fixed bridge of the machine according to the invention;
figure 11 is a frontal longitudinal view of the fixed bridge of the machine according to the invention;
figure 12 is a cross-section view of the fixed bridge of the machine according to the invention.

To understand the philosophy of the machine presented with this application in a clearer fashion, it is worthwhile briefly describing the types and characteristics of the product mainly processed by the machine itself.

It primarily involves the so-called "laminated glass" or "coupled glass" which is formed by two sheets of single glass joined together by means of a membrane layer of plastic material, such as polyvinyl, which irreversibly bonds the two sheets of glass to achieve a "multi-layer" that acquires elevated mechanical characteristics like a greater moment of inertia and modulus of resistance to bending and superb smash-proof characteristics, as the brittleness of the glass, though remaining a characteristic of each single sheet, is compensated by the extraordinary elastic resistance of the closely interposed membrane (it is sufficient to think of employing such glass in its three-dimensional form in the automotive field). Typically, the single glass sheet, in the most well-known solutions, have a thickness of between 3, 4, 5 or 6 mm, while the polyvinyl membrane is formed by one or more layers (max. 4) with a single layer thickness of 0.38 mm.

The process of manufacture that closely bonds both the glass sheets and the membrane, is principally based on the following main but not exclusive phases: washing and drying of each single glass sheet; laying out of the layer or layers of polyvinyl onto a first glass sheet in a horizontal manner; covering this with a second glass sheet and pressing the whole (glass sheet/membrane/glass sheet) on a horizontal heated roller type press, which is then finally treated in a high temperature autoclave (during which phase the membrane transforms itself from opaque to transparent).

This process is currently applied to the maximum dimension available in laminated glass sheets, i.e. 6000 mm x 3210 mm, and the trend today is to use the largest format available in that, logically, the greater the glass sheet the greater the optimisation in reducing waste due to the subsequent cutting procedures can be achieved.

The trend has also involved the demand of studying, optimising and achieving procedures in order to cut the so-called "jumbo sheet" (6000 mm x 3210 mm) in a automatic, ergonomic and economic way, a matter which is rationally achieved for the first time with the machine according to the invention.

The requirement of cutting large sheets of laminated glass is not limited to the case of production of sheets to be employed in their final use, as for example in windows or showcases, but also includes the case of large glass sheet fractionating, as obtained in the course of primary production processes, into sub-sections, or for limitations due to transport or use in small glassworks or for the need of eliminating possible defective areas of the same large glass sheet while saving the remaining parts that fulfil the quality standards required by the buyer.

The assignment and the purpose mentioned above, as well as others which will more clearly appear hereinafter, are achieved by an automatic or semi-automatic machine for the cutting of laminated glass sheets, essentially formed by a succession of the following working stations with a vertical or slightly inclined position of the glass sheet with respect to the vertical plane:

### FEEDING STATION

CUTTING STATION (in turn, made up of the sub-station for scoring the glass and splitting and of a sub-station which separates the membrane) of the glass sheet according to a line parallel to one side of the glass sheet;
CONVEYING STATION of the cut strip of glass;
ROTATING STATION of the same strip of glass;
CONVEYING STATION of the same strip of glass to the first or a subsequent cutting station;
CUTTING STATION (the same one of the previous phase or a further one) of the same strip of glass according to a line parallel to the other side of the original glass plate, thus obtaining further progressive phases concerning both the glass strips and the glass sheet until the complete fractionating of the sheet has been accomplished.

### UNLOADING STATION.

The procedure is performed on the glass sheet in a vertical, or better, slightly inclined position with respect to the vertical plane, yet without excluding its application also on a horizontal position.

To clearly describe the cutting machine for laminated glass sheets, subject of this application, the following drawings which refer to its essential conformation are hereby explained, mentioning possible alternative conformations which will be clearly defined in the claims section.

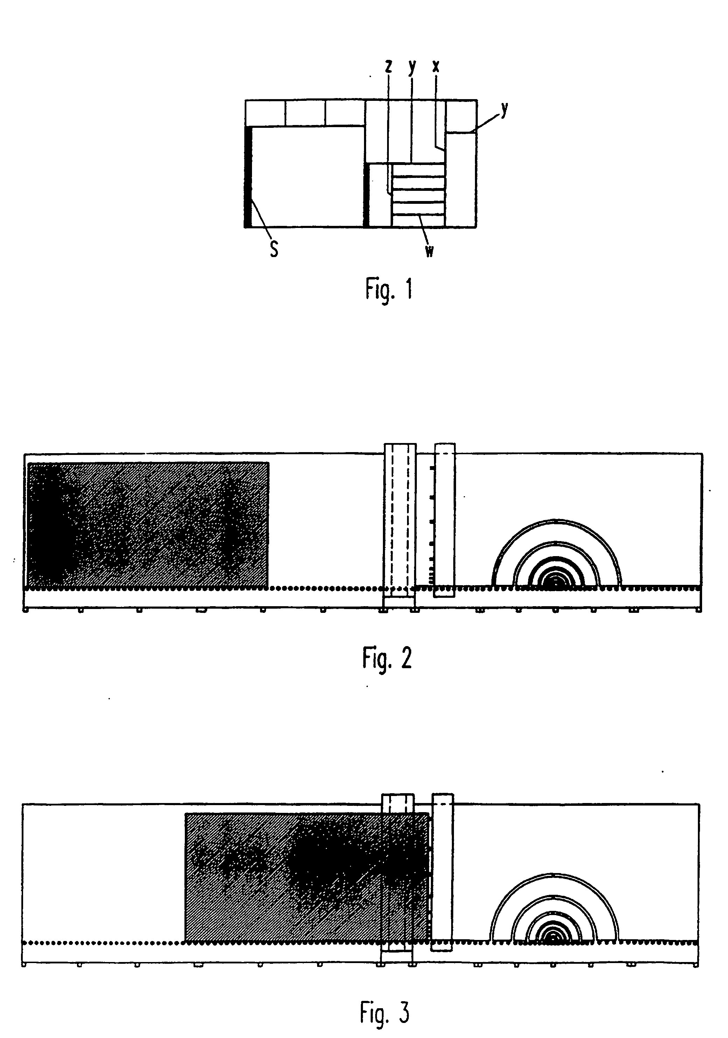

Figure 1 shows the product that is processed using the machine which is the object of this invention, i.e. the jumbo-sized glass sheet, with a tracing sample of the fractionation of the sheets required for their subsequent use. The first cutting level is indicated with "x", the second level indicated with "y", "z" for the third, etc. Between cutting levels, each cut glass strip must be obviously conveyed from the cutting area to the rotating area, rotated and then conveyed to either the first cutting bridge or towards another, should the machine be supplied with more than one cutting bridge. The same drawing shows how, from the jumbo-sized sheet and the application of the procedure of fractionation, one obtains the cut sheets which are ready for their final use as well as those inevitable strips of glass which form the waste (indicated with S) in that it is logically impossible that with the combination of the various sizes of the finished sheets, these correspond to the total area of the initial glass sheet. Bearing in mind the quality of the form and the dimensions of the sheets which are destined to final use, it may be necessary also to carry out the so-called "trimmings" (which are not shown in drawing **1**, to avoid any confusion) so as to avoid any irregularities on the original margins of the jumbo-sized sheet.

Before we penetrate in the course of the description, it would be better to condense the nomenclature and the jargon currently used by those workers in the field of cutting glass, so as to use, for practical reasons, those terms commonly in use, leaving out any possible misunderstandings due to the improper use of terminology currently in use.

CUT: a term used both for the global operation of fractionation of the jumbo-sized sheet or the glass sheet in sizes which can be employed in their final use, and for carrying out a single subdivision of a glass sheet or part of a sheet in two pieces, and, although improperly, for meaning one of the three phases in which the subdivision into two pieces of the laminated glass sheet is carried out, a subdivision which consists in the steps of scoring, in which the glass sheet is usually scored by a diamond cutting tool, splitting (breaking of the two glass sheets), whereby the sheet is broken in correspondence to the previous scoring line, and separating, whereby the membrane layer in polyvinyl is either cut, ruptured or melted.

CUTTING TABLE: machine or simply its flat surface which comes into contact with the glass sheet whereby the cutting sequences are carried out as intended in their complete meaning.

FIXED BRIDGE: part of the machine, which is in a fixed position with respect to the rest of the machine, formed by one or more beams, having various possible structural configurations where the scoring, splitting and separating operations are usually carried out.

MOBILE BRIDGE: part of the machine, which is mobile on guides, having various possible structural configurations where, the scoring operation (in case of a traditional machine) or conveying and measuring of the glass sheet operations (as in the case of the present application) are carried out.

While continuing the description of the machine's stations by commenting the diagrams hereby included representing, for the sake of simplicity, the basic structure of the machine, we anticipate, in preparation to the reading of the claims, that the core of the invention mainly lies in the particular conformation of the FIXED BRIDGE, which no longer incorporates the three operations of scoring/splitting/separation in a single station, but on the contrary carries out the three operations in at least two sub-stations and besides, in the concept of having rendered "vertical" and automating the procedure of cutting the glass sheets, without the operator intervening personally, therefore avoiding any handling of the initial glass sheet and of the subsequent sheets obtained through the cutting session which therefore always remain in the upright position, from the arrival of the raw material to the delivery of the finished product (even the insulated glass panel). As concerns the conformation of the fixed bridge, the innovative aspect concerns the section whereby the membrane is stretched in that, unlike the prior art machines, this is not formed by two separated beams but by beams which are transversally bonded in such a way as to perform an even and precise stretch in the whole field of action. Great advantages are achieved both from an ergonomic and safety point of view as well as from the point of view of occupancy of factory space and of quality.

Figure 2 represents the jumbo-sized sheet in a position where it is being loaded onto the feeding station of the cutting table.

Figure 3 represents the placing of the jumbo-sized sheet (which is then repeated for the further other portions of this same jumbo sheet) in a way that the vertical line, which has been foreseen to be cut, is set in correspondence to the scoring and splitting sub-stations. The desired dimension is determined by the position of the mobile bridge and of the relative reference of contrast to the glass sheet. This mobile bridge is also required for the further clamping and conveyance of the glass strip should this have dimensions such that it cannot be transported by means of the sole conveyor operating in correspondence to the lower edge of the same sheet.

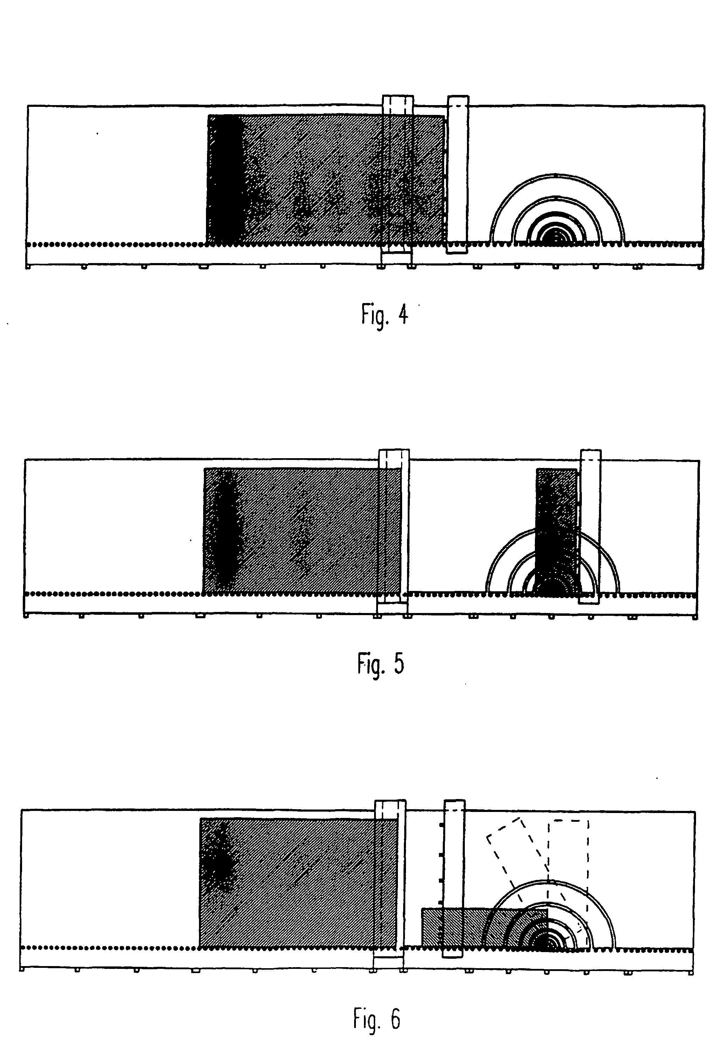

Figure 4 represents the placing of the jumbo-sized sheet (which is then repeated for the further other portions of this same jumbo sheet) so as to bring the vertical line, which has already been scored and split in the previous sub-station, in correspondence to the sub-station which will carry out the membrane separation. In this way a cut has been achieved (in its complete meaning) referred to as level "X".

Alternative solutions are not to be left aside to carry out the scoring, splitting and separating operations, as for example the three sub-stations instead of the two sub-stations depicted in figures 3 and 4.

Figure 5 represents the glass strip, which has been previously cut, conveyed by means of the mobile bridge and of the relative clamps in correspondence to the rotating station.

Figure 6 represents the rotation of the same glass strip and the contemporary conveyance of the mobile bridge with the purpose of its anticipated positioning to measure the dimension of the subsequent cut.

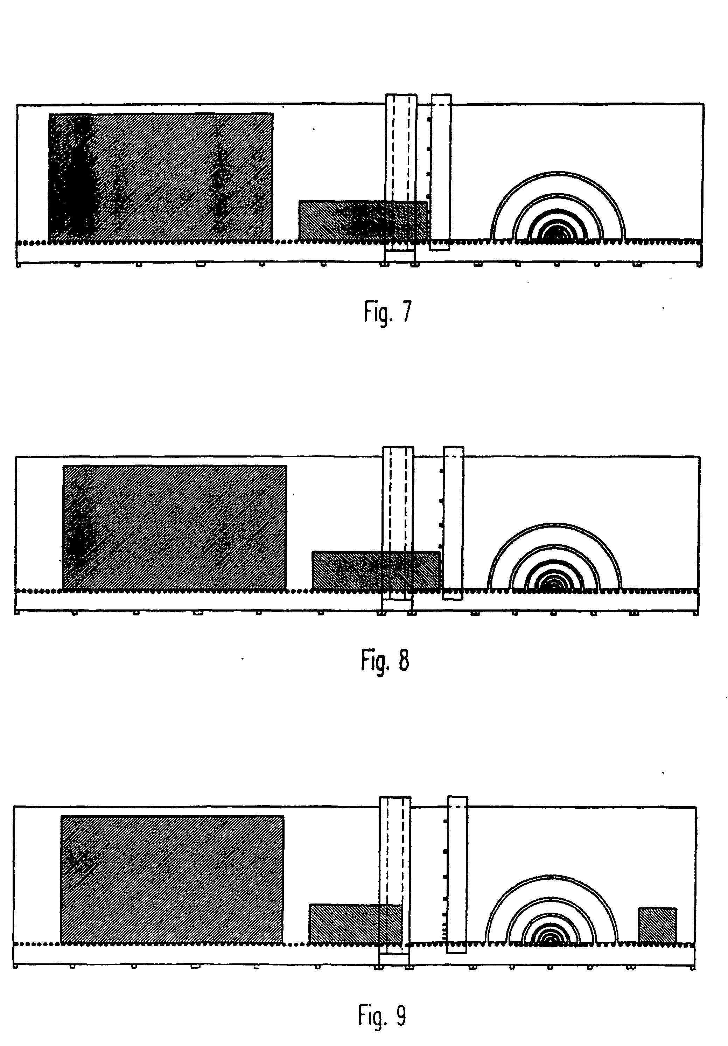

Figure 7 represents the placing of the glass strip (which is then repeated for the further other portions of this same glass strip) in order to set the vertical line destined to be cut in correspondence to the scoring and splitting sub-station.

Figure 8 represents the placing of the glass strip (which is then repeated for the further other portions of this same glass strip) in such a way as to bring the vertical line, which has already been scored and split at the previous sub-station, in correspondence to the separating sub-station (operation which is not effected in the case of monolithic, i.e. not laminated, glass). In this way, a cut has been carried out at level "Y" (in its most complete meaning).

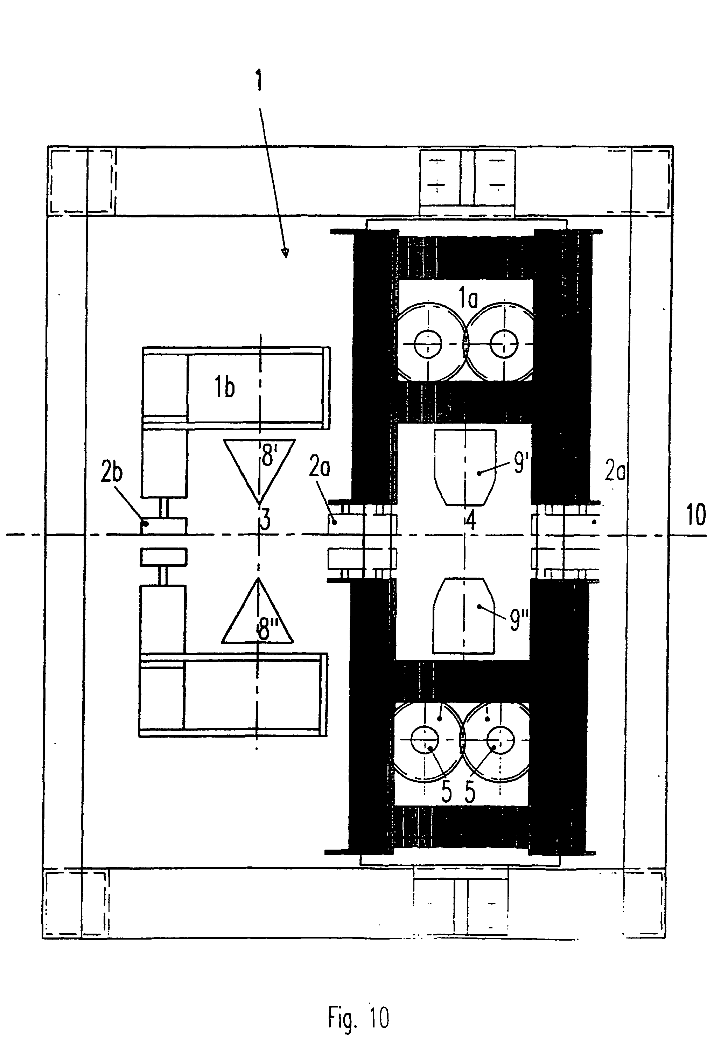

Figure 9 represents the first finished piece (obtained through two cutting levels "X" and "Y") conveyed to the unloading station and destined to further transformations.

It is clear that the subsequent cutting sessions to complete the fractionating of the jumbo-sized sheet or of the sheet in sizes which are then used otherwise, for example in the production of insulating glass, are carried out by repeating the steps described above, eventually prompting the subsequent levels of cuts "Z", "W", etc.

Figure 10 represents a cross-section view of a possible conformation of the CUTTING STATION, divided into a sub-station for scoring and splitting (breaking of the two glass sheets) and in a sub-station for the separation of the membrane layer (without excluding the constructive solution which can be achieved with three separate sub-stations, for respectively scoring, splitting and separation).

In particular, point 1 indicates the metalwork structure of the main bridge, subdivided into a main beam 1a which forms and having an exclusive U-shaped conformation (which has been shaded for better identification, also to support the claims) and into a cantilever 1b applied to the main beam 1a and commanded with this last one. Respectively, the means for scoring and splitting are located between the cantilever and the main beam, whereas the separation means are located in the middle region of the main beam 1a.

With 2a and 2b, these points respectively indicate the pads belonging to the main beam and the cantilever which are required to hold the laminated glass during the sub-phases of separation as well as the sub-phases of scoring and splitting. The passage from the scoring and splitting sub-phase to the separation sub-phase is carried out with the opening of the group of the main beam and the cantilever, which therefore release the pads clamping the glass sheet, so that the glass sheet is further conveyed so as to bring the line of interest for the process from axis 3 to axis 4.

The opening and closing movements of the beams are carried out either pneumatically, hydraulically or electrically (not represented here as this is state of the art) but combined with mechanical devices, such as torsion shaft 5, for example, which terminates with toothed wheels 6 which interact with toothed rails 7, so as to achieve a smooth and precise movement.

With 8' and 8", the opposed carriages containing the scoring and splitting tools are indicated. 9' and 9" indicate the heating element for melting the membrane layer which is applied at the same time the membrane is stretched with the movement, in the direction of axis 10 and in the sense of the subsequent advanced movement of the glass sheet, of the clamping pads 2a placed on the exit side of the main beam whereas the clamping pads 2a placed on the opposite side act as fixed and idle contrasts.

In a particular embodiment of the invention, the clamping pads 2a placed at the exit side of the main beam 1a are hinged to the main beam itself so as to be movable in the direction of axis 10 while stretching the membrane layer of the laminated glass sheet, as claimed in dependent claim 3.

In a particular embodiment of the invention, the heating element (9', 9") comprises radiant lamps coupled with a reflector shaped for focusing the emitted light on the membrane of the laminated glass sheet, so as to heat the membrane, as claimed in dependent claim 5.

These lamps can be arranged on a same side or on opposite sides with respect to the glass sheet, as claimed in dependent claim 6.

In another embodiment of the invention, the heating element is an electronic means, as claimed in claim 9.

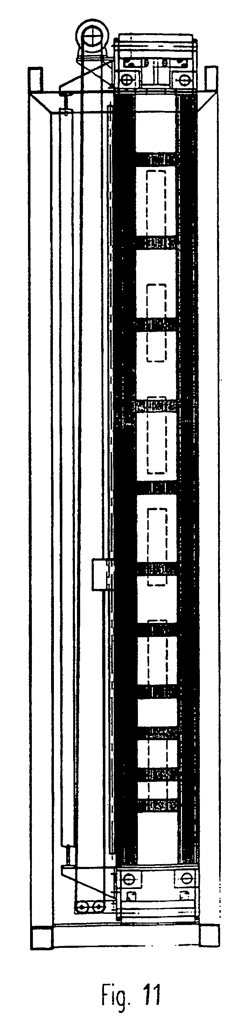

Figure 11 represents a frontal longitudinal view of the fixed bridge, where the components of the previous drawing are clearly indicated.

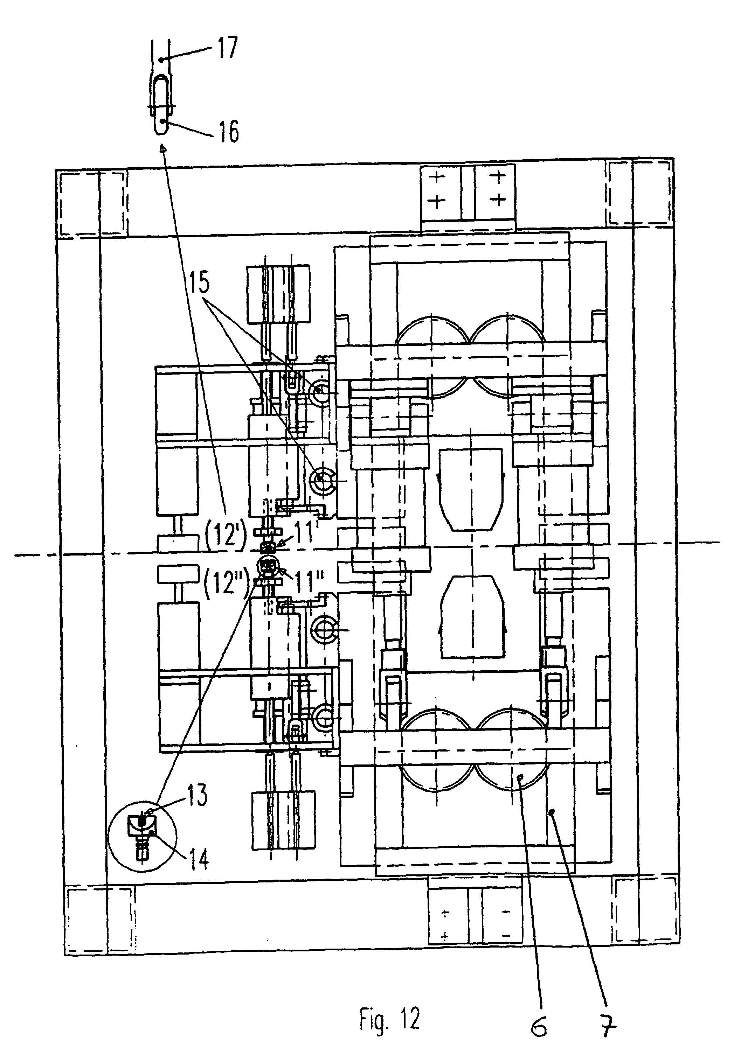

Figure 12 represents the constructive details of the opposed carriages 8' and 8" identified also in the respective scoring turrets 11' and 11" as well as the splitting turrets 12' and 12" (hidden by the scoring turret). In more detail, each scoring turret is formed by a scoring wheel 13, relative tool support 14 and adjustable mechanism, such as the spring, scoring strength balancing means; the same turret can be conveyed, being connected to the carrier 8, along the cutting direction, along the guiding rails 15 by means of an electrical movement, for instance, and a transmission belt; the two scoring turrets act contemporarily and in contrast to the glass. Each splitting turret is formed by a small contrasting wheel 16 which pushes against the glass sheet and by a tool support 17, fixed onto the carrier 8 which therefore allows the splitting turret to be conveyed in the cutting direction along the guiding rails 15; the two splitting turrets act in contrast on the glass, but in subsequent phases.

In a particular embodiment, at least one of the conveyor and the fixed bridge is orientable, so as to cut the glass sheet along an inclined direction with respect to the vertical one, as claimed in dependent claim 8.

## Claims

1. Machine for cutting laminated glass comprising a table for supporting a laminated glass sheet, a conveyor for moving the glass sheet in a feed direction and a fixed bridge for carrying out scoring, splitting and separation operations on said glass sheet, the table being in a position which is vertical or slightly inclined with respect to the vertical so as to support said glass sheet in said vertical or slightly inclined position,
**characterized in that**
said fixed bridge comprises at least two consecutive substations for respectively carrying out said scoring and splitting operations and said separation operation,
the substation for carrying out the separation operation comprising two substantially U-shaped main beams facing each other so as to receive the glass sheet therebetween,
the substation for carrying out the scoring and splitting operations being comprised between each main beam (1a) of said two U-shaped main beams and a respective cantilever (1b) applied to said main beam (1a),
each main beam (1a) and each cantilever (1b) comprising pads (2a, 2b) facing respective pads (2a, 2b) of the other main beam and the other cantilever, said pads (2a, 2b) for clamping said glass sheet during said scoring, splitting and separation operations.

2. Machine for cutting laminated glass according to claim 1, **characterized in that** said pads (2a) of said main beam (1a) comprise pads placed at an exit side of said main beam with respect to the feed direction (10) of said glass sheet and pads placed at input side of said main beam with respect to the feed direction (10) of said glass sheet, the pads (2a) at the exit side of said main beam being movable in said feed direction (10) so as to stretch a membrane layer of said glass sheet during said separation operation.

3. Machine for cutting laminated glass according to claim 2, **characterized in that** said pads at the exit side of each main beam (1a) are hinged to the main beam (1a) at notable distance from the surface of the glass sheet.

4. Machine for cutting laminated glass according to any one of the preceding claims, **characterized in that** said substation for carrying out the separation operation comprises a heating element (9', 9") for melting the membrane layer of said laminated glass, said heating element (9', 9") being arranged within at least one main beam (1a) in a position between its pads (2a).

5. Machine for cutting laminated glass according to claim 4, **characterized in that** said heating element (9', 9") comprises radiant lamps coupled with a reflector shaped for focusing the emitted light on the membrane of said laminated glass sheet, so as to heat the membrane.

6. Machine for cutting laminated glass according to claim 5, **characterized in that** said lamps are arranged on a same side or on opposite sides with respect to said glass sheet.

7. Machine for cutting laminated glass according to any one of the preceding claims, **characterized in that** it comprises mechanical devices for moving towards each other said U-shaped main beams facing each other (1a), so as to clamp said glass sheet therebetween, each mechanical device for driving a respective main beam and comprising a torsion shaft (5) terminating with a toothed wheel (6), each main beam comprising a toothed rail (7) interacting with said toothed wheel (6).

8. Machine for cutting laminated glass according to claims 1 or 2, **characterized in that** at least one of the conveyor and the fixed bridge is orientable, so as to cut the glass sheet along an inclined direction with respect to the vertical one.

9. Machine for cutting laminated glass according to claim 4, **characterized in that** said heating element (9', 9") is an electric means.

## Patentansprüche

1. Maschine zum Schneiden von Verbundglas, umfassend einen Tisch, der eine Verbundglasscheibe trägt, ein Förderband, das die Glasscheibe in eine Vorschubrichtung bewegt, und eine feststehende Brücke, welche die Arbeitsschritte Ritzen, Spalten und Ablösen auf der Glasscheibe durchführt, wobei der Tisch in einer Position ist, die vertikal oder bezüglich der Vertikalen leicht geneigt ist, um die Glasscheibe in der vertikalen oder leicht geneigten Position zu tragen,
**dadurch gekennzeichnet, dass**
die feststehende Brücke mindestens zwei aufeinander folgende Teilstationen umfasst, von denen eine die Arbeitsschritte Ritzen und Spalten und eine andere den Arbeitsschritt Ablösen durchführt,
die Teilstation zum Durchführen des Arbeitsschritts Ablösen zwei im Wesentlichen U-förmige Hauptträger umfasst, die einander so gegenüberliegen, dass sie die Glasscheibe zwischen sich aufnehmen,
die Teilstation zum Durchführen der Arbeitsschritte Ritzen und Spalten zwischen jedem Hauptträger (1a) der beiden U-förmigen Hauptträger und einem zugehörigen, an dem Hauptträger (1a) angebrachten Kragarm (1b) vorgesehen ist,
jeder Hauptträger (1a) und jeder Kragarm (1b) Auflageelemente (2a, 2b) umfasst, die zugehörigen Auflageelementen (2a, 2b) des anderen Hauptträgers und des anderen Kragarms gegenüberliegen, wobei die Auflageelemente (2a, 2b) ausgebildet sind, die Glasscheibe während der Arbeitsschritte Ritzen, Spalten und Ablösen festzuklemmen.

2. Maschine zum Schneiden von Verbundglas nach Anspruch 1, **dadurch gekennzeichnet, dass** die Auflageelemente (2a) des Hauptträgers (1a) Auflageelemente, die bezüglich der Vorschubrichtung (10) der Glasscheibe an einer Ausgangsseite des Hauptträgers angeordnet sind, und Auflageelemente umfassen, die bezüglich der Vorschubrichtung (10) der Glasscheibe an einer Eingangsseite des Hauptträgers angeordnet sind, wobei die Auflageelemente (2a) an der Ausgangsseite des Hauptträgers in die Vorschubrichtung (10) bewegbar sind, um eine Folienschicht der Glasscheibe während des Arbeitsschritts Ablösen auseinander zu ziehen.

3. Maschine zum Schneiden von Verbundglas nach Anspruch 2, **dadurch gekennzeichnet, dass** die Auflageelemente an der Ausgangsseite jedes Hauptträgers (1a) mit einem deutlichen Abstand von der Oberfläche der Glasscheibe verschwenkbar an dem Hauptträger (1a) befestigt sind.

4. Maschine zum Schneiden von Verbundglas nach einem der vorhergehenden Ansprüche, **dadurch gekennzeichnet, dass** die Teilstation zum Durchführen des Arbeitsschritts Ablösen ein Heizelement (9', 9") zum Abschmelzen der Folienschicht des Verbundglases umfasst, wobei das Heizelement (9', 9") mindestens innerhalb eines Hauptträgers (1a) in einer Position zwischen seinen Auflageelementen (2a) angeordnet ist.

5. Maschine zum Schneiden von Verbundglas nach Anspruch 4, **dadurch gekennzeichnet, dass** das Heizelement (9', 9") abstrahlende Lampen umfasst, die mit einem Reflektor gekoppelt sind, der so geformt ist, dass er das ausgesendete Licht auf die Folie der Verbundglasscheibe fokussiert, um so die Folie zu erwärmen.

6. Maschine zum Schneiden von Verbundglas nach Anspruch 5, **dadurch gekennzeichnet, dass** die Lampen auf derselben Seite oder auf einander abgewandten Seiten bezüglich der Glassscheibe angeordnet sind.

7. Maschine zum Schneiden von Verbundglas nach einem der vorhergehenden Ansprüche, **dadurch gekennzeichnet, dass** sie mechanische Vorrichtungen umfasst, welche die sich einander gegenüberliegenden U-förmigen Hauptträger (1a) auf einander zubewegen, um die Glasscheibe zwischen diese zu klemmen, wobei jede mechanische Vorrichtung einen jeweiligen Hauptträger antreibt und eine Torsionswelle (5) umfasst, die mit einem Zahnrad (6) abschließt, wobei jeder Hauptträger eine Zahnschiene (7) umfasst, die mit dem Zahnrad (6) zusammenwirkt.

8. Maschine zum Schneiden von Verbundglas nach Anspruch 1 oder 2, **dadurch gekennzeichnet, dass** zumindest das Förderband oder die feststehende Brücke so ausgerichtet werden kann, dass die Glasscheibe in einer bezüglich der Vertikalen geneigten Richtung geschnitten wird.

9. Maschine zum Schneiden von Verbundglas nach Anspruch 4, **dadurch gekennzeichnet, dass** das Heizelement (9', 9") ein elektrisches Mittel ist.

## Revendications

1. Machine pour couper du verre feuilleté, comprenant une table pour supporter une feuille de verre feuilleté, un convoyeur pour déplacer la feuille de verre dans une direction de délivrance et un pont fixe pour effectuer des opérations d'entaillage, de division et de séparation sur ladite feuille de verre, la table étant dans une position qui est verticale ou légèrement inclinée par rapport à la verticale de façon à supporter ladite feuille de verre dans ladite position verticale ou légèrement inclinée,
**caractérisée en ce que** :
ledit pont fixe comprend au moins deux sous-stations consécutives pour effectuer respectivement lesdites opérations d'entaillage et de division et ladite opération de séparation,
la sous-station pour effectuer l'opération de séparation comprend deux poutres principales sensiblement en forme de U mutuellement en vis-à-vis afin de recevoir la feuille de verre entre celles-ci,
la sous-station pour effectuer les opérations d'entaillage et de division est constituée entre chaque poutre principale (1a) desdites deux poutres principales en forme de U et un porte-à-faux respectif (1b) appliqué à ladite poutre principale (1a),
chaque poutre principale (1a) et chaque porte-à-faux (1b) comprend des tampons (2a, 2b) en vis-à-vis de tampons respectifs (2a, 2b) de l'autre poutre principale et de l'autre porte-à-faux, lesdits tampons (2a, 2b) servant à serrer ladite feuille de verre durant lesdites opérations d'entaillage, de division et de séparation.

2. Machine pour couper du verre feuilleté selon la revendication 1, **caractérisée en ce que** lesdits tampons (2a) de ladite poutre principale (1a) comprennent des tampons disposés d'un côté de sortie de ladite poutre principale par rapport à la direction de délivrance (10) de ladite feuille de verre et des tampons disposés d'un côté d'entrée de ladite poutre principale par rapport à la direction de délivrance (10) de ladite feuille de verre, les tampons (2a) du côté de sortie de ladite poutre principale pouvant se déplacer dans ladite direction de délivrance (10) de façon à étirer une couche de membrane de ladite feuille de verre durant ladite opération de séparation.

3. Machine pour couper du verre feuilleté selon la revendication 2, **caractérisée en ce que** lesdits tampons du côté de sortie de chaque poutre principale (1a) sont articulés par rapport à la poutre principale (1a) à une distance notable de la surface de la feuille de verre.

4. Machine pour couper du verre feuilleté selon l'une quelconque des revendications précédentes, **caractérisée en ce que** ladite sous-station pour effectuer l'opération de séparation comprend un élément chauffant (9', 9") pour faire fondre la couche de membrane dudit verre feuilleté, ledit élément chauffant (9', 9") étant agencé à l'intérieur d'au moins une poutre principale (1a) dans une position entre ses tampons (2a).

5. Machine pour couper du verre feuilleté selon la revendication 4, **caractérisée en ce que** ledit élément chauffant (9', 9") comprend des lampes à rayonnement couplées à un réflecteur ayant une forme permettant de focaliser la lumière émise sur la membrane de ladite feuille de verre feuilleté, de façon à chauffer la membrane.

6. Machine pour couper du verre feuilleté selon la revendication 5, **caractérisée en ce que** lesdites lampes sont agencées d'un même côté ou sur des côtés opposés par rapport à ladite feuille de verre.

7. Machine pour couper du verre feuilleté selon l'une quelconque des revendications précédentes, **caractérisée en ce qu'**elle comprend des dispositifs mécaniques pour rapprocher l'une de l'autre lesdites poutres principales en forme de U en vis-à-vis l'une de l'autre (1a), de façon à serrer ladite feuille de verre entre celles-ci, chaque dispositif mécanique servant à actionner une poutre principale respective et comprenant un arbre de torsion (5) s'achevant par une roue dentée (6), chaque poutre principale comprenant un rail denté (7) interagissant avec ladite roue dentée (6).

8. Machine pour couper du verre feuilleté selon la revendication 1 ou 2, **caractérisée en ce qu'**au moins l'un parmi le convoyeur et le pont fixe peut être orienté, de façon à couper la feuille de verre le long d'une direction inclinée par rapport à la direction verticale.

9. Machine pour couper du verre feuilleté selon la revendication 4, **caractérisée en ce que** ledit élément chauffant (9', 9"), est constitué par des moyens électriques.
